# DEMANDE DE BREVET EUROPEEN

(11) **EP 1 582 580 A1**
(43) Date de publication de la demande: **05.10.2005**
(21) Numéro de dépôt: 05300238.2
(22) Date de dépôt: 31.03.2005
(51) Int. Cl.: C12G 1/02

(54) **Cuve pour cuvier de vinification et/ou de garde, à piètement réservoir**

(30) Priorité: 02.04.2004 FR 0450656
(71) Demandeur: Lejeune, Patrick, 33350 Gardegan (FR)
(72) Inventeur: Lejeune, Patrick, 33350 Gardegan (FR)
(74) Mandataire: Fantin, Laurent

(57) **Abrégé**

L'objet de l'invention est une cuve pour cuvier de vinification et/ou de garde comprenant une première chambre (10) principale disposée en partie supérieure de ladite cuve, caractérisée en ce qu'elle comprend un pied (12) volumique formant une seconde chambre (28).

## Description

La présente invention concerne une cuve pour cuvier de vinification et/ou de garde à piétement réservoir.

On utilise les cuves en vinification pour assurer la fermentation du raisin. En effet, les raisins égrappés et foulés sont introduits dans une cuve, généralement en inox pour les chais modernes. Ces raisins fermente dans la cuve afin de transformer les sucres en alcool, cette réaction étant contrôlée généralement par apport de calories ou de frigories, par une circulation en périphérie de la cuve.

La cuve comprend une ouverture en partie haute pour permettre l'introduction de la vendange et pour autoriser l'accès à l'intérieur de la cuve en sorte de réaliser les opérations nécessaires durant la fermentation telles que les pigeages, les remontages, oxygénation.

En partie inférieure, il est prévu une porte d'accès ainsi qu'au moins un piquage pour permettre l'écoulement du vin en fin de fermentation ou la connexion d'une pompe de remontage lorsque celui-ci est pratiqué.

Ces cuves sont généralement disposées dans un cuvier qui regroupe plusieurs cuves, voire plusieurs dizaines de cuves. ces cuves reposent sur des pieds, généralement quatre pieds sur un sol lisse du type carrelage pour faciliter le nettoyage car les différentes opérations provoquent nécessairement des écoulements au sol. On note d'ores et déjà que ces pieds sont un obstacle au nettoyage d'une part pour l'accès au personnel et d'autre part pour l'accès aux moyens de nettoyage, plus particulièrement aux jets des nettoyeurs haute pression, sauf à faire le tour pour chacun des quatre pieds.

Ces cuves sont donc agencées pour être juxtaposées et généralement liées entre elles par des passerelles afin que les intervenants puisse aller d'une cuve à l'autre sans avoir à descendre à chaque fois.

Ces cuviers sont prévus pour être spacieux mais il y a une limite qui est lié au fait que la plupart d'entre eux étant contrôlés en température, il vaut mieux limiter le volume. De plus, même spacieux en période de non utilisation, on constate que l'espace devient toujours exigu en période de vendange. Il se trouve que les dispositifs nécessaires lors de la fermentation sont nombreux et tous utilisés en même temps, ce qui encombre l'espace.

Il conviendrait de pouvoir gagner de la place dans le cuvier, notamment au droit de la cuve pour en approcher les barriques de recueil de jus, les bacs tampon, les tuyaux, les pompes, les raccords.

De plus, on sait aussi que, après la vinification, il convient de recueillir le vin ainsi obtenu constituant la majorité du volume de la cuve mais aussi le jus de goutte qui est le vin issu de l'égouttage du chapeau de marc sous l'effet de la gravité, recueilli lui avant la collecte du marc et son pressage.

Un autre aspect non négligeable d'un chais est le caractère esthétique qui doit également être conservé, voire amélioré, surtout dans les cuviers rattachés à une exploitation renommée.

La technique doit donc pouvoir être alliée à un aspect visuel satisfaisant, ce qui est une contrainte supplémentaire.

La cuve selon la présente invention est maintenant décrite en détail suivant un mode de réalisation particulier, non limitatif, cette description s'appuyant sur les dessins annexés qui représentent à travers ses différentes figures :
- figure 1 : une vue en perspective d'une cuve selon la présente invention,
- figure 2 : une vue en coupe transversale de la cuve selon la figure 1,
- figure 3 : une vue d'un cuvier comportant plusieurs cuves juxtaposées, et
- figure 4 : une vue d'une variante de réalisation de la cuve selon l'invention.

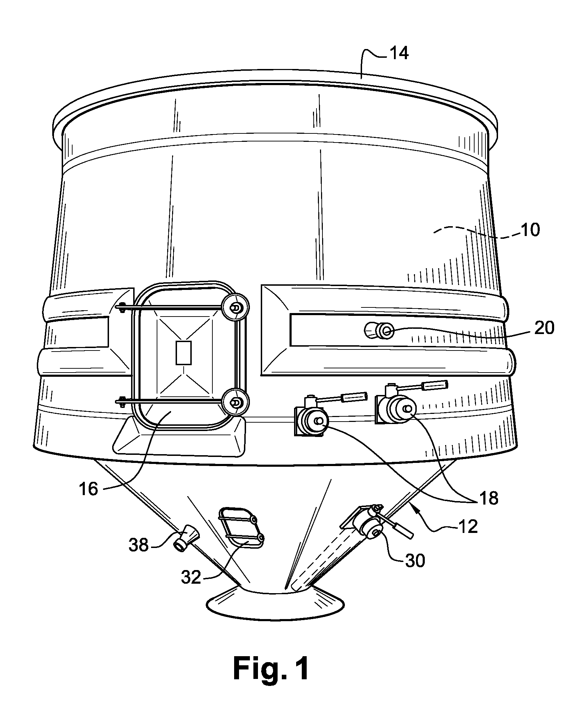

La cuve représentée sur la figure 1 comprend une première chambre 10 de grande capacité en partie supérieure et un pied 12 volumique en partie inférieure, ledit pied reposant sur le sol.

La cuve supérieure est de type connue et comporte une ouverture 14 sur le dessus, une trappe 16 d'accès en partie inférieure et au moins un piquage 18, en l'occurrence deux piquages. Un piquage 20 supplémentaire peut être prévu pour l'oxygénation.

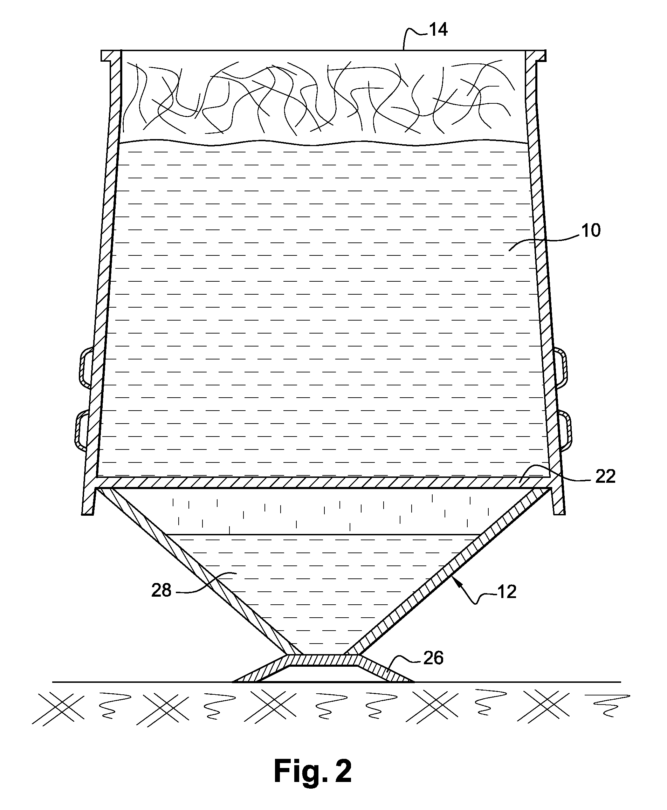

Cette cuve supérieure est solidaire du pied volumique 12. Comme on peut le constater sur la coupe de la figure 2, le fond 22 de la cuve supérieure constitue le face supérieure du pied 12 volumique.

Ce pied 12 volumique est en forme de cône renversé, reposant sur sa pointe 24 directement. De façon à limiter la pression au sol, il est possible de prévoir un disque 26 d'appui.

Ce pied 12volumique constitue un seconde chambre 28 de plus petite capacité.

Cette seconde chambre est également équipée d'au moins un piquage 30 permettant de relier l'intérieur de ladite chambre avec l'extérieur. Il est aussi possible disposer sur la paroi une trappe 32 d'accès.

La paroi de cette chambre peut recevoir une isolation avec une double paroi et/ou des moyens de mise en température par des circulations de fluides intérieures ou extérieures.

Une telle cuve est généralement disposée en série avec d'autres au sein d'un même cuvier.

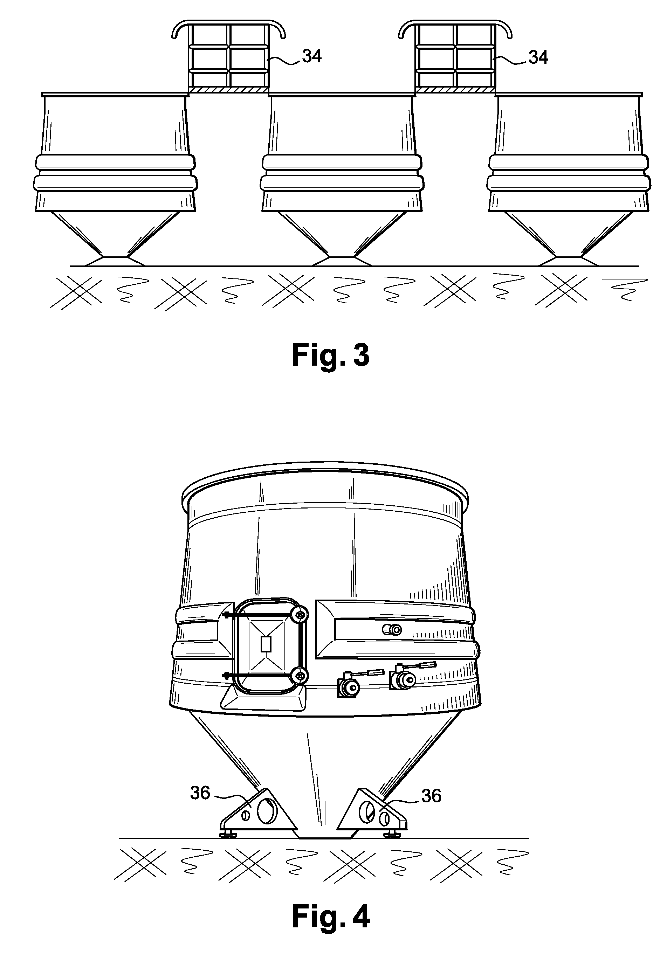

Si la cuve est stable par elle-même, ceci d'autant plus qu'elle est remplie de liquide, elle peut néanmoins être reliée aux autres cuves par les passerelles de circulation 34 qui assurent la sécurité, notamment en cas de fausse manoeuvre durant le remplissage de la cuve par exemple. Un tel agencement est représenté sur la figure 3.

Une telle cuve permet ainsi de limiter l'emprise au sol et surtout dégage l'espace au sol autour du pied, voire du disque 26 d'appui.

Le nettoyage est facilité et supprime les éventuelles accumulations.

De plus, si du matériel tel que des barriques ou des bacs tampon doit être disposé à proximité immédiate de la cuve, ce matériel peut être avancé sous la cuve à proximité de la partie conique.

On constate avec l'agencement selon l'invention que l'espace entre deux cuves juxtaposées est relativement important.

Lors des étapes de fermentation, seule la chambre supérieure est utilisée car elle est de volume important, de l'ordre de 50 hectolitres pour fixer un ordre d'idées.

Après la fermentation réalisée de façon connue, le vin obtenu est écoulé grâce à un des piquages. Le gâteau de marc, constitué de la matière solide qui flottait sur le vin, vient reposer sur le fond de la première chambre.

Le jus qui s'écoule de ce gâteau de marc, sous le seul effet de la gravité est de grande qualité et généralement de volume réduit. Il est recueilli dans un récipient séparé du vin de premier écoulement.

Grâce à la cuve selon la présente invention, il est possible de recueillir ce vin dans la seconde chambre directement, en connectant un tuyau d'un piquage de la première chambre au piquage de la seconde chambre.

Ce jus est donc recueilli par gravité. Il est possible de l'inerter au sein même de cette seconde chambre afin que l'oxygène ne provoque pas une oxydation prématurée de ce vin de goutte de qualité.

Le marc, une fois égoutté, est transféré après ouverture de la trappe vers un pressoir pour en extraire le vin, ceci de façon connue.

Le vin de goutte peut rester dans la seconde chambre, sans perturber la suite des étapes successives et surtout sans que le vin ne subisse des transferts par pompage et des oxydations préjudiciables à ses qualités organoleptiques.

Dans le cas où la cuve doit être disposée dans un endroit isolé, il est possible selon la variante de la figure 4 de prévoir des stabilisateurs 36 rapportés sur la paroi du pied volumique, par exemple à 120°.

Dans ce cas, l'encombrement reste toujours limité comparé à l'art antérieur et le pied volumique permet de disposer de la seconde chambre notamment pour le recueil du vin de goutte.

En variante non représentée, il est possible de ménager une conduite interne reliant directement la première chambre à la seconde chambre, cette conduite étant équipée d'une vanne accessible de l'extérieur.

De même, le pied volumique peut comporter un piquage 38 gaz pour permettre l'inertage de la seconde chambre.

De façon préférentielle, les cuves concernées sont réalisées en acier inoxydable. Quant aux formes telles que représentées sur les dessins à savoir tronconiques, elles ne sont en aucun cas limitatives mais seulement illustratives. En effet, la cuve supérieure peut être de forme cylindrique ou à section ovale en fonction des besoins esthétiques ou pour des considérations d'encombrement.

## Revendications

1. Cuve pour cuvier de vinification et/ou de garde comprenant une première chambre (10) principale disposée en partie supérieure de ladite cuve, **caractérisée en ce qu'**elle comprend un pied (12) volumique formant une seconde chambre (28).

2. Cuve selon la revendication 1, **caractérisée en ce que** le pied (12) volumique est en forme de cône renversé reposant sur sa pointe (24).

3. Cuve selon la revendication 2, **caractérisée en ce qu'**elle comprend un disque d'appui un disque (26) d'appui au sol solidaire de la pointe (24) du cône.

4. Cuve selon l'une quelconque des revendications précédentes, **caractérisée en ce que** le piétement volumique est équipé d'au moins un piquage (30) fluide.

5. Cuve selon l'une quelconque des revendications précédentes, **caractérisée en ce que** le piétement volumique est équipé d'au moins un piquage (38) gaz.

6. Cuve selon l'une quelconque des revendications précédentes, **caractérisée en ce que** le piétement volumique est équipé sur sa paroi d'une trappe (32) d'accès.

7. Cuve selon l'une quelconque des revendications 1 à 6, **caractérisée en ce qu'**elle comprend une conduite interne reliant directement la première chambre à la seconde chambre, cette conduite étant équipée d'une vanne accessible de l' extérieur.

8. Cuve selon l'une quelconque des revendications précédentes, **caractérisée en ce qu'**elle comprend des stabilisateurs (36).

9. Cuvier équipé d'au moins deux cuves selon l'une quelconque des revendications 1 à 8, **caractérisé en ce que** la seconde chambre (28) est isolée et comporte des moyens de mise en température.

10. Cuvier équipé d'au moins deux cuves selon l'une quelconque des revendications 1 à 9, **caractérisé en ce que** les cuves sont liées entre elles par les passerelles (32) de circulation.
